# EUROPEAN PATENT SPECIFICATION

(11) **EP 1 206 822 B1**
(45) Date of publication and mention of the grant of the patent: **04.06.2003**
(21) Application number: 00951734.3
(22) Date of filing: 10.08.2000
(51) Int. Cl.: H02G 15/18, H01R 4/72

(54) **DEVICE FOR ENCLOSING AN ELONGATE SUBSTRATE**
VORRICHTUNG ZUM UMHÜLLEN EINES LANGGESTRECKTEN SUBSTRATS
DISPOSITIF DESTINE A ENTOURER UN SUBSTRAT ALLONGE

(30) Priority: 24.08.1999 GB 9919930
(43) Date of publication of application: 22.05.2002
(73) Proprietor: Tyco Electronics Raychem NV, 3010 Kessel-lo (BE)
(72) Inventor: GRAF, Richard, D-85716 Unterschleissheim (DE); LIETZKE, Ralf, D-85646 Anzing (DE); VAN OVERMEIR, Peter, B-3000 Leuven (BE)
(74) Representative: Jay, Anthony William
(86) International application number: GB0003081
(87) International publication number: WO01015295

(56) References cited:
- EP-A- 0 093 617
- WO-A-00/02297
- GB-A- 1 353 752
- GB-A- 2 135 139
- GB-A- 2 173 052
- US-A- 3 814 139
- US-A- 4 820 561

## Description

The present invention relates to a device for enclosing an elongate substrate, such as a telecommunications or electrical power cable. More in particular, the present invention relates to a device for enclosing an elongate substrate, the device comprising a wall member and a meltable sealing material arranged on the wall member. Such a device is well known in practice and is used to, for example, enclose cable joints. The sealing material, disposed on the interior of the wall member, that is the side facing the substrate, seals off the substrate and is retained and enclosed by the wall member. The sealing material is able to melt when heated so as to flow around and conform closely to the substrate.

As devices of this kind are used to seal the substrate from the environment, keeping out moisture, it is essential that the wall member of the device remains intact during and after installation. As these devices are often buried in the ground along with the substrate they enclose, substantial pressure may be exerted on their outer wall and therefore on the wall member. The enclosed substrates may contain cable joints and cable connectors, some of which have relatively sharp edges which may damage the wall member even when the device is provided with a liner, as disclosed in e.g. US 4,820,561 (Raychem). The present inventors have found that pointed or sharp substrates jeopardise the sealing capacity of these devices.

GB 2 135 139 discloses an article for forming a cable block or for enclosing a cable splice in accordance with the preamble of claim 1. The article comprises a heat-recoverable driver sheet and a particulate heat-activatable adhesive contained in a mesh or net. An internal heat barrier net or mesh may be provided.

It is an object of the present invention to provide a device for enclosing an elongate substrate which provides protection for the wall member against pointed or sharp substrates.

It is another object of the present invention to provide a device for enclosing an elongate substrate which protects the substrate against mechanical damage from outside the enclosure.

It is still another object of the present invention to provide a device for enclosing an elongate substrate which can be folded around the substrate while allowing a sufficient amount of sealing material to be applied.

In order to meet these and other objects the present invention provides a device for enclosing an elongate substrate, the device comprising a wall member, a meltable sealing material arranged on the wall member, and a substantially continuous spacer member extending over at least part of the wall member so as to, when the device is applied to the substrate, space the substrate and the wall member apart, the spacer member being provided with a plurality of through holes for allowing the sealing material to flow through the spacer member when melted, characterised in that the sealing material is disposed on the wall member in the form of spaced blocks, and in that the spacer member bridges at least two blocks.

By providing a spacer member the substrate will not directly be in contact with the wall member, thus reducing the risk of any sharp protrusions of the substrate damaging the wall member. When the sealing material is solid and provides a spacing, the spacer member provides an additional spacing between the wall member and the substrate. When the sealing member is melted during the application of the device, the spacer member defines the actual spacing between the wall member and the substrate.

To allow the sealing material to reach the substrate when the spacer member is disposed on the side of the sealing material facing the substrate, the spacer member is provided with a plurality of through holes. This allows the sealing material, when melted, to flow through the spacer member so as to reach and seal the substrate. Even when non-melting sealing materials are used a spacer member having through holes may be used.

In a device according to the invention, the sealing material is advantageously disposed on the wall member in the form of spaced blocks. Such an arrangement, which is described in more detail in International Patent Application WO 00/02297 (Raychem), makes it possible for the device to be folded around a substrate while still allowing a sufficient amount of sealing material to be applied. The spacer member bridges at least two blocks, thus shielding the part of the wall member between those blocks.

By arranging the spacer member on or in the sealing material, in such a manner that the spacer member extends substantially parallel to the wall member, it is ensured that the spacer member effectively encloses the substrate when the device is applied, thus protecting the wall member. In addition, use may advantageously be made of the fact that many sealing materials are sticky, holding the spacer member in place when put on top of the sealing material. Although more than one spacer member may be used, preferably a single, continuous spacer member extends over the wall member and in or on top of the sealing material so as to cover those parts of the wall member which might otherwise come in contact with the substrate when the device is applied.

It is noted that European Patent Application EP 0 093 617 (Raychem) discloses a liner comprising a plurality of side-by-side elongate elements of substantially rectangular cross-section. The liner is electrically conductive and extends over the entire length of the cable joint to provide electrical shielding. The use of a meltable sealing material is not disclosed.

In the present invention the spacer member preferably does not extend beyond the sealing material arranged on the wall member. By making the sealing and spacer surfaces substantially coincide, a very effective protection of the substrate is obtained. However, in many applications the spacer member may cover a smaller area, extending over only part of the sealing material.

Preferably, both the wall member and the spacer member are flexible. This allows the device to be of the wrap-around type, providing an enclosure which is easily adapted to the shape of the substrate.

Preferably, the wall member is heat-shrinkable, thus providing a heat-shrink enclosure. In this case, the spacer member is preferably compressible in at least one longitudinal direction, that is, in its length and/or width. The spacer member can be, but is preferably not, compressible in thickness. To provide a suitable mechanical protection the thickness (height) is preferably at least 1 mm, more preferably at least 2 mm.

Advantageously, the spacer member is constituted by a mesh. In this way, a light structure is obtained through which the melted sealing material can easily flow to reach the substrate. Also, a mesh or net-like structure is flexible and may easily be made compressible in one (longitudinal) direction.

In order to be suitable for use in a heat-shrink enclosure, the spacer member is advantageously heat-resistant so as to keep its original structure when heated. Also, in order to provide electrical insulation, the spacer member is advantageously non-conductive. In a preferred embodiment, therefore, the spacer member is made of a non-conductive, heat resistant material. Suitable materials are heat-resistant plastics.

The present invention further provides a spacer member for use in a device for enclosing an elongate substrate, as well as a cable joint enclosed by a device for enclosing an elongate substrate as set out above. The invention will further be described with reference to an exemplary embodiment illustrated in the accompanying drawings, in which:
Fig. 1 schematically shows, in perspective, a device according to the present invention prior to the application thereof.
Fig. 2 schematically shows, in partial cross-section, the device of Fig. 1 as applied on a cable joint.
Fig. 3 schematically shows, in partial cross-section, an alternative embodiment of the device of Fig. 1.

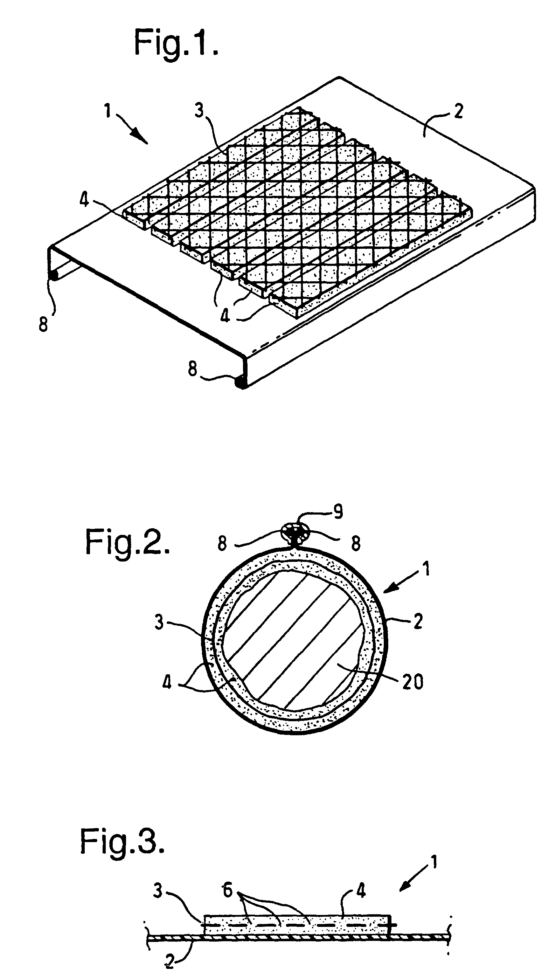

The device 1 shown merely by way of non-limiting example in Fig. 1 comprises a wall 2, which is constituted by a flexible sheet of material, preferably heat-shrinkable material. The wall 2 is provided with closure rails 8 along opposite longitudinal edges which can be held together by means of a separate channel component (not shown) so as to form a closed configuration during use. The side of the wall facing up in Fig. 1 is the side facing the substrate during use. On this side, blocks of sealing material 4 are applied. These blocks are preferably spaced apart so as to allow the device to be easily folded around the substrate (not shown).

On top of the sealing material 4 a spacer 3 is disposed. In the embodiment shown, the single spacer 3 is constituted by a mesh. This structure provides several advantageous properties:
- the spacer has through-holes, allowing melted sealing material to pass through the spacer and reach the substrate;
- the spacer is flexible, allowing it to be used in a wrap-around enclosure; and
- the spacer is compressible in its longitudinal direction, allowing it to be used in conjunction with a heat-shrinkable wall member.

The mesh preferably consists of an array of suitably crossing bars or wires which are fixed by, for example, welding or gluing. The spacings between the wires of the spacer 3, defining the dimensions of the through-holes, depend on the particular application but may, for example, lie between 5 mm and 50 mm. The bars or wires themselves may have a thickness lying preferably between 0.5 and 5 mm, more preferably between 2 and 3 mm.

Due to the adhesive nature of the sealing material 4, the spacer 3 stays in place when lightly pressed onto or even into the sealing material, making the spacer extremely easy to apply. The sealing material 4 can be supplied in the form of pellets contained in mesh bags or pouches. A row of (preferably spaced) pouches may be arranged on the wall 2. If the sealing material is provided in this way, some adhesive may be used to keep the spacer 3 in its desired position. It will be understood that mesh bags containing sealing material may be used in conjunction with a mesh-shaped spacer 3 and that the mesh bags on the one hand and the spacer on the other hand serve entirely different purposes.

Instead of a single, continuous spacer 3, two or more spacers may be used, together providing a continuous shielding of that part of the wall which otherwise would touch the substrate. Thus, in accordance with the present invention, the spacer or spacers cover the relevant part or parts of the wall uninterruptedly. In the preferred embodiment shown, this relevant part coincides with the part of the wall 2 on which the row of blocks of sealing material 4 is applied. However, depending on the particular substrate (e.g. a cable joint), a smaller area may be covered by the spacer 3.

As shown in Fig. 2, the device 1 of Fig. 1 may be wrapped around a substrate (cable joint) 20 so as to enclose it. The closure rails 8 are held together by a channel component 9 known *per se.*

As shown in Fig. 3, the device 1 of Fig. 1 may comprise a spacer 3 which is embedded in the (preferably hot-melt) sealing material 4. Through holes 6 both facilitate the manufacture of the device and allow any melted sealing material to flow freely. In the case of a mesh and relatively soft sealing material, the spacer 3 may be simply pushed into the sealing material 4 during the manufacture of the device or at least prior to the installation thereof.

The spacer 3 has a sufficient thickness, for example about 5 mm, to accommodate any protrusions the cable joint 20 is likely to have. It will be understood, though, that depending on the particular substrate other thicknesses may also be suitable, for example 1 mm or 10 mm. When the device 1 is heated (for example by using a torch), the sealing material 4 may melt and flow through the spacer 3 to reach and seal the substrate 20. The wall 2 may shrink under the influence of the heat and compress the spacer 3. The melted sealing material 4 is also compressed, forcing it into any openings of the substrate, thus providing an excellent sealing. Due to the presence of the spacer 3, the wall 2 cannot be damaged by any protrusions of the substrate 20.

It will be understood by those skilled in the art that the present invention is not limited to the embodiments described above and that many additions and modifications can be made without departing from the scope of the invention as defined in the appending claims.

## Claims

1. Device (1) for enclosing an elongate substrate (20), the device comprising a wall member (2), a meltable sealing material (4) arranged on the wall member (2), and a substantially continuous spacer member (3) extending over at least part of the wall member (2) so as to, when the device is applied to the substrate (20), space the substrate (20) and the wall member (2) apart, the spacer member (3) being provided with a plurality of through holes (6) for allowing the sealing material (4) to flow through the spacer member (3) when melted, **characterised in that** the sealing material (4) is disposed on the wall member (2) in the form of spaced blocks, and **in that** the spacer member (3) bridges at least two blocks.

2. Device according to claim 1, wherein the spacer member (3) does not extend beyond the sealing material (4) arranged on the wall member (2).

3. Device according to claim 1 or 2, wherein the spacer member (3) is at least partially embedded in the sealing material (4).

4. Device according to any of the preceding claims, wherein the wall member (2) and the spacer member (3) are flexible.

5. Device according to any of the preceding claims, wherein the spacer member (3) is made of a non-conductive, heat resistant material.

6. Device according to claim 5, wherein the spacer member (3) is compressible in at least one direction.

7. Device according to any of the preceding claims, wherein the wall member (2) is heat-shrinkable

8. Device according to any of the preceding claims, wherein the spacer member (3) is constituted by a mesh.

9. Device according to claim 8, wherein the mesh has a thickness of at least 1 mm, preferably at least 2 mm.

10. Cable joint (20) enclosed by a device (1) according to any of claims 1-9.

## Patentansprüche

1. Vorrichtung (1) zum Umschließen eines langgestreckten Substrats (20), wobei die Vorrichtung ein Wandelement (2), ein an dem Wandelement (2) angebrachtes schmelzbares Dichtungsmaterial (4) und einen im wesentlichen durchgehend ausgebildeten Abstandshalter (3) aufweist, der sich zumindest über einen Teil des Wandelementes (2) erstreckt, um das Substrat (20) und das Wandelement (2) voneinander zu beabstanden, wenn die Vorrichtung an dem Substrat (20) angebracht ist, wobei der Abstandshalter (3) mit einer Vielzahl von Durchgangslöchern (6) versehen ist, die es dem Dichtungsmaterial (4) ermöglichen, wenn es geschmolzen ist, durch den Abstandshalter (3) zu fließen,
**dadurch gekennzeichnet,**
**daß** das Dichtungsmaterial (4) an dem Wandelement (2) in Form beabstandeter Blöcke vorgesehen ist und daß der Abstandshalter (3) mindestens zwei Blöcke überbrückt.

2. Vorrichtung nach Anspruch 1,
wobei sich der Abstandshalter (3) nicht über das an dem Wandelement (2) angebrachte Dichtungsmaterial (4) hinaus erstreckt.

3. Vorrichtung nach Anspruch 1 oder 2,
wobei der Abstandshalter (3) zumindest teilweise in dem Dichtungsmaterial eingebettet ist.

4. Vorrichtung nach einem der vorhergehenden Ansprüche,
wobei das Wandelement (2) und der Abstandshalter (3) flexibel sind.

5. Vorrichtung nach einem der vorhergehenden Ansprüche,
wobei der Abstandshalter (3) aus einem nicht-leitenden, wärmebeständigen Material besteht.

6. Vorrichtung nach Anspruch 5,
wobei der Abstandshalter (3) in mindestens einer Richtung kompressibel ist.

7. Vorrichtung nach einem der vorhergehenden Ansprüche,
wobei das Wandelement (2) wärmeschrumpfbar ist.

8. Vorrichtung nach einem der vorhergehenden Ansprüche,
wobei der Abstandshalter (3) aus einem Gitter besteht.

9. Vorrichtung nach Anspruch 8,
wobei das Gitter eine Dicke von mindestens 1 mm, vorzugsweise mindestens 2 mm besitzt.

10. Kabelverbindung (20),
die von einer Vorrichtung (1) gemäß einem der Ansprüche 1 bis 9 umschlossen ist.

## Revendications

1. Dispositif (1) destiné à renfermer un substrat allongé (20), le dispositif comportant un élément de paroi (2), une matière fusible (4) de scellement agencée sur l'élément de paroi (2), et un élément sensiblement continu (3) d'écartement s'étendant au-dessus d'au moins une partie de l'élément de paroi (2) afin, lorsque le dispositif est appliqué au substrat (20), d'espacer le substrat (20) et l'élément de paroi (2) l'un de l'autre, l'élément d'écartement (3) étant pourvu de plusieurs trous traversants (6) pour permettre à la matière (4) de scellement de couler à travers l'élément d'écartement (3) lorsqu'elle est à l'état fondu, **caractérisé en ce que** la matière (4) de scellement est disposée sur l'élément de paroi (2) sous la forme de blocs espacés, et **en ce que** l'élément d'écartement (3) relie au moins deux blocs.

2. Dispositif selon la revendication 1, dans lequel l'élément d'écartement (3) ne s'étend pas au-delà de la matière (4) de scellement agencée sur l'élément de paroi (2).

3. Dispositif selon la revendication 1 ou 2, dans lequel l'élément d'écartement (3) est au moins partiellement encastré dans la matière (4) de scellement.

4. Dispositif selon l'une quelconque des revendications précédentes, dans lequel l'élément de paroi (2) et l'élément d'écartement (3) sont flexibles.

5. Dispositif selon l'une quelconque des revendications précédentes, dans lequel l'élément d'écartement (3) est formé d'une matière non conductrice, résistante à la chaleur.

6. Dispositif selon la revendication 5, dans lequel l'élément d'écartement (3) est compressible dans au moins une direction.

7. Dispositif selon l'une quelconque des revendications précédentes, dans lequel l'élément de paroi (2) est thermorétractable.

8. Dispositif selon l'une quelconque des revendications précédentes, dans lequel l'élément d'écartement (3) est constitué d'une toile maillée.

9. Dispositif selon la revendication 8, dans lequel la toile maillée a une épaisseur d'au moins 1 mm, avantageusement d'au moins 2 mm.

10. Raccord (20) de câbles enfermé par un dispositif (1) selon l'une quelconque des revendications 1 à 9.
